(19) Europäisches Patentamt / European Patent Office / Office européen des brevets

(11) **EP 4 195 462 B1**

(12) **EUROPEAN PATENT SPECIFICATION**

(45) Date of publication and mention
of the grant of the patent:
**03.09.2025 Bulletin 2025/36**

(21) Application number: **21852768.7**

(22) Date of filing: **20.07.2021**

(51) International Patent Classification (IPC):
$H01B\ 3/00$ (2006.01)   $H01B\ 3/40$ (2006.01)
$H02K\ 3/30$ (2006.01)   $H02K\ 3/34$ (2006.01)
$H02K\ 15/12$ (2025.01)   $H02K\ 1/04$ (2006.01)

(52) Cooperative Patent Classification (CPC):
**H02K 1/04; H01B 3/002; H01B 3/40; H02K 3/30;**
**Y02T 10/64**

(86) International application number:
**PCT/JP2021/027201**

(87) International publication number:
**WO 2022/030252 (10.02.2022 Gazette 2022/06)**

(54) **INSULATING MATERIAL FOR STATOR, STATOR, AND METHOD FOR MANUFACTURING STATOR**

ISOLIERMATERIAL FÜR STATOR, STATOR UND VERFAHREN ZUR HERSTELLUNG DES STATORS

MATÉRIAU ISOLANT POUR STATOR, STATOR ET PROCÉDÉ DE FABRICATION DE STATOR

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **07.08.2020 JP 2020134787**

(43) Date of publication of application:
**14.06.2023 Bulletin 2023/24**

(73) Proprietor: **Resonac Corporation**
**Tokyo 105-7325 (JP)**

(72) Inventors:
• **NISHIYAMA, Tomoo**
**Tokyo 100-6606 (JP)**

• **MURASUGI, Narutoshi**
**Tokyo 100-6606 (JP)**

(74) Representative: **Becker, Eberhard**
**Becker Kurig & Partner**
**Patentanwälte mbB**
**Bavariastraße 7**
**80336 München (DE)**

(56) References cited:
EP-A1- 3 310 838      EP-B1- 3 310 838
WO-A1-2015/075906     JP-A- 2018 016 669
JP-A- 2018 016 669    JP-A- S5 473 205
US-A1- 2017 301 429

**Description**

[Technical Field]

The present disclosure relates to an insulating material for a stator, a stator, and a method for manufacturing a stator.

[Background Art]

Conventionally, a method of using varnish is commonly used for fixing coils of a stator in a motor. For example, Patent Literature 1 describes a configuration of a stator manufactured by providing insulating paper between coils and teeth, impregnating varnish between the insulating paper and the coils, and curing it.

Also, a method of molding gaps between coils and a core with a resin has also been proposed. For example, Patent Literature 2 discloses a stator manufactured by fitting coils and a core together and performing resin-molding of gaps between the coils and the core and of side end surfaces of the coils, thereby integrally molding the coils and the core.

Patent Literature 3 describes a method for forming a stator by fixing coils and a stator core with a resin molding part made of a synthetic resin such as epoxy resin.

Patent Literature 4 discloses a stator configured of a cured body of a thermosetting resin composition. It also discloses that the thermosetting resin composition contains one or more thermosetting resins selected from the group consisting of phenol resins, epoxy resins, and unsaturated polyester resins, and an inorganic filler.

Patent Literature 5 discloses a material for use in an insulation system, especially in an electrical machine for insulation between coils of a stator.

[Citation List]

[Patent Literature]

[Patent Literature 1]
Japanese Patent Laid-Open No. 2019-170105
[Patent Literature 2]
Japanese Patent Laid-Open No. 2009-261086
[Patent Literature 3]
International Publication No. WO 2013/121590
[Patent Literature 4]
Japanese Patent Laid-Open No. 2017-5870
[Patent Literature 5]
US Patent Application No. US 2017/301429 A1

[Summary of Invention]

[Technical Problem]

On the other hand, in recent years, particularly in motors for vehicles such as hybrid vehicles and electric vehicles, further improvements in performance have been pursued for the purpose of achieving higher output and lower fuel consumption. In addition, there is also an increasing demand for reduction in size of motors for the purpose of securing a large vehicle interior space, reducing a weight of a vehicle, reducing costs, and the like. Along with improvements in performance and reduction in size of motors, attempts to increase the number of turns of coils and narrow gaps between coils by increasing coil density have progressed. However, in conventional techniques so far, no study has been conducted on an insulating material that can ensure excellent insulation characteristics in accordance with an increase in coil density.

The present disclosure relates to providing an insulating material for a stator suitably applicable to a stator having higher coil density, a stator having coils insulated by the insulating material for a stator, and a method for manufacturing the stator.

[Solution to Problem]

Means for solving the above problems are defined by the appended claims.

[Advantageous Effects of Invention]

According to the present disclosure, there are provided an insulating material for a stator suitably applicable to a stator having higher coil density, a stator having coils insulated by the insulating material for a stator, and a method for manufacturing the stator.

[Description of Embodiments]

Embodiments for carrying out the present invention will be described in detail below. However, the present invention is not limited to the following embodiments. The constituent elements (including element steps and the like) of the following embodiments are not essential unless otherwise specified. The same applies to numerical values and their ranges, which do not limit the present invention.

In the present disclosure, the term "process" includes not only a process that is independent from other processes, but also a process that cannot be clearly distinguished from other processes as long as the purpose of the process is achieved.

In the present disclosure, a numerical range indicated using the term "to" includes numerical values before and after the term "to" as minimum and maximum values.

In the numerical ranges described stepwise in the present disclosure, an upper limit or a lower limit of one numerical range may be replaced with an upper limit or a lower limit of another numerical range described stepwise. Also, in the numerical ranges described in the present disclosure, upper limits or lower limits of the numerical ranges may be replaced with values shown in examples.

In the present disclosure, each component may contain a plurality of types of applicable substances. In a case in which there are a plurality of types of substances corresponding to each component in a composition, a rate or amount of content of each component is a total rate or amount of content of the plurality of types of substances contained in the composition unless otherwise specified.

In the present disclosure, a plurality of types of particles corresponding to each component may be included. In a case in which there are a plurality of types of particles corresponding to each component in a composition, a particle diameter of each component is a value for a mixture of the plurality of types of particles contained in the composition unless otherwise specified.

In the present disclosure, the term "layer" includes not only a case in which the layer is formed in the entire region at the time of observing the region in which the layer exists, but also a case in which the layer is formed only in a part of the region.

<<Insulating material for stator>>

An insulating material for a stator according to the present disclosure contains an epoxy resin, a curing agent, and a spherical inorganic filler, and is used for insulation between coils of a stator. The inventors have attempted to develop an insulating material that can provide excellent insulation characteristics between coils and have found that an insulating material containing an epoxy resin, a curing agent, and a spherical inorganic filler can be suitably used for insulation between coils of a stator since the insulating material has excellent performance in terms of fillability and dimensional stability. Also, in the present disclosure, the insulation is electrical insulation.

The insulating material for a stator according to the present disclosure may contain a resin material other than the epoxy resin and the curing agent (that is, a curing agent for the epoxy resin), but from the viewpoint of exhibiting effects such as dimensional stability particularly well, a total rate of content of the epoxy resin and the curing agent (that is, a curing agent for the epoxy resin) in components excluding the inorganic filler in the insulating material for a stator is preferably at least 50% by mass, more preferably at least 70% by mass, and even more preferably at least 90% by mass. For example, in the case of using a phenol curing agent as the curing agent, a total rate of content of the epoxy resin and the phenol curing agent in the insulating material for a stator excluding the inorganic fillers is preferably at least 50% by mass, more preferably at least 70% by mass, and even more preferably at least 90% by mass. Components other than the inorganic filler in the insulating material for a stator may be referred to as "resin components" for convenience below.

Each component of the insulating material for a stator according to the present disclosure will be described in detail below.

<Epoxy resin>

The insulating material for a stator according to the present disclosure includes the epoxy resin. A type of the epoxy resin is not particularly limited as long as it has an epoxy group in its molecule. The epoxy resin may be solid or liquid at normal temperature and normal pressure (for example, 25°C under atmospheric pressure) and is preferably solid.

As the epoxy resin, specifically, a novolak-type epoxy resin, which is an epoxidized novolak resin, obtained through condensation or co-condensation of at least one phenolic compound selected from the group consisting of a phenol compound such as phenol, cresol, xylenol, resorcinol, catechol, bisphenol A, or bisphenol F and a naphthol compound such as α-naphthol, β-naphthol, or dihydroxynaphthalene, and an aliphatic aldehyde compound such as formaldehyde, acetaldehyde, or propionaldehyde in the presence of an acidic catalyst (a phenolic novolak-type epoxy resin, an ortho cresol novolak-type epoxy resin, or the like); a triphenylmethane-type epoxy resin, which is an epoxidized triphenylmethane-type phenol resin, obtained through condensation or co-condensation of the phenolic compound and an aromatic aldehyde compound such as benzaldehyde or salicylaldehyde in the presence of an acidic catalyst; a copolymerized epoxy resin, which is an epoxidized novolak resin, obtained through co-condensation of the phenol compound, a naphthol compound, and an aldehyde compound in the presence of an acidic catalyst; a diphenylmethane-type epoxy resin which is a diglycidyl ether such as bisphenol A or bisphenol F; a biphenyl-type epoxy resin which is a diglycidyl ether of an alkyl-substituted or unsubstituted biphenol; a stilbene-type epoxy resin which is a diglycidyl ether of a stilbene-based phenol compound; a sulfur atom-containing epoxy resin which is a diglycidyl ether such as bisphenol S; an epoxy resin which is a glycidyl ether of an alcohol such as butanediol, polyethylene glycol, or polypropylene glycol; a glycidyl ester-type epoxy resin which is a glycidyl ester of a polyvalent carboxylic acid compound such as phthalic acid, isophthalic acid, or tetrahydrophthalic acid; a glycidylamine-type epoxy resin obtained by substituting active hydrogens bonded to nitrogen atoms of aniline, diaminodiphenylmethane, isocyanuric acid, and the like with glycidyl groups; a dicyclopentadiene-type epoxy resin obtained by epoxidizing a co-condensation resin of dicyclopentadiene and a phenol compound; an alicyclic epoxy resin such as vinylcyclohexene diepoxide, 3,4-epoxycyclohexylmethyl-3,4-epoxycyclohexanecarboxylate, or 2-(3,4-epoxy)cyclohexyl-5,5-spiro(3,4-epoxy)cyclohexane-m-dioxane, which is obtained by epoxidizing olefin bonds in the molecule; a para-xylylene-modified epoxy resin which is a glycidyl ether of a para-xylylene-modified phenol resin; a meta-xylylene-modified epoxy resin which is a glycidyl ether of a meta-xylylene-modified phenol resin; a terpene-modified epoxy resin which is a glycidyl ether of a terpene-modified phenol resin; a dicyclopentadiene-modified epoxy resin which is a glycidyl ether of a dicyclopentadiene-modified phenol resin; a cyclopentadiene-modified epoxy resin which is a glycidyl ether of a cyclopentadiene-modified phenol resin; a polycyclic aromatic ring-modified epoxy resin which is a glycidyl ether of a polycyclic aromatic ring-modified phenol resin; a naphthalene-type epoxy resin which is a glycidyl ether of a naphthalene ring-containing phenol resin; a halogenated phenolic novolak-type epoxy resin; a hydroquinone-type epoxy resin; a trimethylolpropane-type epoxy resin; a linear aliphatic epoxy resin obtained by oxidizing olefin bonds with peracids such as peracetic acid; an aralkyl-type epoxy resin obtained by epoxidizing an aralkyl-type phenol resin such as a phenol aralkyl resin or a naphthol aralkyl resin; or the like can be exemplified. Further, an epoxidized silicone resin, an epoxidized acrylic resin, or the like can also be exemplified as the epoxy resin. One type of the epoxy resin may be used alone, or two or more types thereof may be used in combination.

Among them, as a preferred epoxy resin from the viewpoint of mechanical strength, a polyfunctional epoxy resin such as a triphenylmethane-type epoxy resin can be exemplified.

An epoxy equivalent (molecular weight/number of epoxy groups) of the epoxy resin is not particularly limited. From the viewpoint of mechanical strength, the epoxy equivalent of the epoxy resin is preferably 100 g/eq to 1000 g/eq and more preferably 150 g/eq to 500 g/eq.

The epoxy equivalent of the epoxy resin is a value measured by a method according to JIS K 7236:2009.

In a case in which the epoxy resin is solid, its softening point or melting point is not particularly limited. The softening point or melting point of the epoxy resin is preferably 40°C to 180°C from the viewpoint of moldability, and more preferably 50°C to 130°C from the viewpoint of handleability at the time of preparing the insulating material for a stator.

The melting point of the epoxy resin is a value measured by differential scanning calorimetry (DSC), and the softening point of the epoxy resin is a value measured by a method according to JIS K 7234:1986 (a ring and ball method).

A content of the epoxy resin is not particularly limited. From the viewpoint of fluidity, fillability, and the like, the content of the epoxy resin is preferably at least 5% by mass and preferably at least 8% by mass with respect to a total mass of the insulating material for a stator. Further, from the viewpoint of mechanical strength and the like, the content of the epoxy resin is preferably at most 20% by mass and more preferably at most 15% by mass with respect to the total mass of the insulating material for a stator. From these viewpoints, the content of the epoxy resin is preferably 5% by mass to 20% by mass, more preferably 8% by mass to 15% by mass, may be from 8% by mass to 12% by mass, or may be from 10% by mass to 15% by mass with respect to the total mass of the insulating material for a stator.

<Curing agent>

The insulating material for a stator contains the curing agent. The curing agent can react with the epoxy group of the epoxy resin to cure the epoxy resin. As the curing agent, a phenol curing agent (a compound having phenolic hydroxyl groups in the molecule) is used. From the viewpoint of heat resistance, high strength, and fillability, the curing agent is a phenol curing agent. The curing agent may be solid or liquid at 25°C under atmospheric pressure and is preferably solid.

As the phenol curing agent, specifically, a polyhydric phenol compound such as resorcin, catechol, bisphenol A, bisphenol F, or substituted or unsubstituted biphenol; a novolak-type phenol resin obtained through condensation or co-condensation of at least one phenolic compound selected from the group consisting of a phenol compound such as phenol, cresol, xylenol, resorcin, catechol, bisphenol A, bisphenol F, phenylphenol, or aminophenol and a naphthol compound such as $\alpha$-naphthol, $\beta$-naphthol, or dihydroxynaphthalene, and an aldehyde compound such as formaldehyde, acetaldehyde, or propionaldehyde in the presence of an acidic catalyst; an aralkyl-type phenol resin such as a phenol aralkyl resin or a naphthol aralkyl resin synthesized from the phenolic compound and dimethoxyparaxylene, bis(methoxymethyl) biphenyl, or the like; a para-xylylene and/or meta-xylylene-modified phenol resin; a melamine-modified phenol resin; a terpene-modified phenol resin; a dicyclopentadiene-type phenol resin and a dicyclopentadiene-type naphthol resin synthesized through copolymerization from the phenolic compound and dicyclopentadiene; a cyclopentadiene-modified phenol resin; a polycyclic aromatic ring-modified phenol resin; a biphenyl-type phenol resin; a triphenylmethane-type phenol resin obtained through condensation or co-condensation of the phenolic compound and an aromatic aldehyde compound such as benzaldehyde or salicylaldehyde in the presence of an acidic catalyst; a phenol resin obtained by copolymerizing two or more of the above resins; or the like can be exemplified. One type of the phenol curing agent may be used alone or two or more types thereof may be used in combination. As a preferred phenol resin from the viewpoint of curability, mechanical strength, and the like, a novolak-type phenol resin can be exemplified.

A functional group equivalent of the curing agent (a hydroxyl equivalent in the case of a phenol curing agent, or an active hydrogen equivalent in the case of an amine curing agent) is not particularly limited. From the viewpoint of mechanical strength, the functional group equivalent of the curing agent is preferably 70 g/eq to 1000 g/eq and more preferably 80 g/eq to 500 g/eq.

The hydroxyl equivalent in the case of a phenol curing agent refers to a value calculated on the basis of a hydroxyl value measured in accordance with JIS K0070:1992. Also, the active hydrogen equivalent in the case of an amine-based curing agent refers to a value calculated on the basis of an amine value measured according to JIS K7237:1995.

In a case in which the curing agent is solid, its softening point or melting point is not particularly limited. The softening point or melting point of the curing agent is preferably 40°C to 180°C from the viewpoint of moldability, and more preferably 50°C to 130°C from the viewpoint of handleability of the insulating material for a stator.

The melting point or softening point of the curing agent is a value measured in the same manner as the melting point or softening point of the epoxy resin.

An epoxy resin-curing agent equivalent ratio, that is, a ratio of the number of functional groups in the curing agent to the number of epoxy groups in the epoxy resin (number of functional groups in curing agent/number of epoxy groups in epoxy resin), is not particularly limited. From the viewpoint of inhibiting an unreacted amount of each, the epoxy resin-curing agent equivalent ratio is preferably set in the range of 0.5 to 2.0, and more preferably set in the range of 0.6 to 1.3. From the viewpoint of moldability, the epoxy resin-curing agent equivalent ratio is even more preferably set in the range of 0.8 to 1.2.

<Inorganic filler>

The insulating material for a stator contains the spherical inorganic filler. The "spherical shape" of the inorganic filler of the present disclosure includes not only a true spherical shape but also an elliptical spherical shape or a substantially spherical shape, of which a surface may have irregularities and particles may have voids. In the case of elliptical spherical or substantially spherical particles, particles with a circularity of 0.8 to 1.0 in scanning electron microscope (SEM) observation can be included in the spherical inorganic filler.

In the present disclosure, the "circularity" of the inorganic filler is a value obtained by the following expression. A circularity closer to 1 means that a shape of a particle is closer to a perfect circle.

$$\text{Circularity} = 4\pi \times (\text{area}) \div (\text{perimeter length})^2$$

Area: Area of particle obtained by SEM observation
Perimeter length: Perimeter length of particle obtained by SEM observation

An average circularity of the spherical inorganic filler in SEM observation is preferably 0.8 to 1.0 and more preferably 0.9 to 1.0.

The average circularity is an arithmetic mean value of circularities of 100 particles arbitrarily selected in an SEM image. The circularity of the inorganic filler can be calculated using a known image analysis means as necessary.

The insulating material for a stator according to the present disclosure may contain an inorganic filler having a shape other than a spherical shape (a plate shape, a needle shape, a fibrous shape, a polygonal shape, or the like), but from the viewpoint of further improving fillability and mechanical strength, a content of the spherical inorganic filler in the entire inorganic filler is preferably at least 50% by number, more preferably at least 70% by number, and preferably at least 90% by number. A number-based proportion of the spherical inorganic filler is a proportion of spherical particles in 1000 particles randomly selected from the SEM image of the inorganic filler.

An average aspect ratio of the spherical inorganic filler in SEM observation is preferably 0.8 to 1.0 and more preferably 0.9 to 1.0. In the present disclosure, the "aspect ratio" of the inorganic filler represents a value obtained by dividing a length of a minor axis of a particle by a length of a major axis thereof (minor axis/major axis). The average aspect ratio of the inorganic filler is an arithmetic mean value of aspect ratios of 100 particles randomly selected from the SEM image of the inorganic filler. The aspect ratio of the inorganic filler can be calculated from an image of the inorganic filler using a known image analysis means as necessary.

A type of inorganic filler is not particularly limited. For example, as the inorganic filler, fine powders of silica such as fused silica or crystalline silica, glass, alumina, calcium carbonate, zirconium silicate, calcium silicate, silicon nitride, aluminum nitride, boron nitride, magnesium oxide, beryllia, zirconia, zircon, forsterite, steatite, spinel, mullite, titania, talc, clay, mica, or the like, beads obtained by spheroidizing these, or the like can be exemplified. An inorganic filler having a flame retardant effect may also be used. As the inorganic filler having a flame retardant effect, composite metal hydroxides such as aluminum hydroxide, magnesium hydroxide, composite hydroxide of magnesium and zinc, zinc borate, or the like can be exemplified.

Among them, from the viewpoint of moldability, the inorganic filler preferably contains at least one selected from the group consisting of silica, alumina, and magnesium oxide. In a case in which the inorganic filler contains at least one selected from the group consisting of silica, alumina, and magnesium oxide, a total amount of at least one selected from the group consisting of silica, alumina, and magnesium oxide is preferably at least 70% by mass with respect to the total mass of the inorganic filler, more preferably at least 80% by mass, and even more preferably at least 90% by mass.

The content of the inorganic filler is at least 50% by mass with respect to the total mass of the insulating material for a stator, more preferably at least 60% by mass, even more preferably at least 70% by mass, and may be at least 80% by mass. When the content of the inorganic filler is at least 50% by mass with respect to the total mass of the insulating material for a stator, there is a tendency that the insulation characteristics between the coils can be further improved. In addition, there is a tendency that a water absorption rate can be lowered and chemical resistance can be improved. From the viewpoint of ensuring fluidity during molding and improving fillability into voids, the content of the inorganic filler is preferably at most 95% by mass with respect to the total mass of the insulating material for a stator, more preferably at most 90% by mass, even more preferably at most 85% by mass, and may be at most 80% by mass. From the above viewpoints, the content of the inorganic filler is preferably 50% by mass to 95% by mass with respect to the total mass of the insulating material for a stator, more preferably 60% by mass to 90% by mass, even more preferably 70% by mass to 90% by mass, particularly preferably 70% by mass to 85% by mass, and may be 70% to 80% by mass, or may be 80% by mass to 90% by mass.

When the insulating material for a stator is a cured product, the content of the inorganic filler in the cured product can be measured as follows. First, a total mass of the cured product is measured, the cured product is fired at 400°C for 2 hours and then at 700°C for 3 hours to evaporate the resin components, and a mass of the remaining inorganic filler is measured. A ratio of the mass of the inorganic filler to the total mass of the cured product is obtained and defined as the content of the inorganic filler.

An average particle diameter of the inorganic filler is not particularly limited. From the viewpoint of fillability into narrow gaps, the average particle diameter of the inorganic filler is preferably at most 50 $\mu$m, more preferably at most 30 $\mu$m, and even more preferably at most 20 $\mu$m. In addition, from the viewpoint of mechanical strength of the cured product, the average particle diameter of the inorganic filler is preferably at least 5 $\mu$m, more preferably at least 10 $\mu$m, and even more preferably at least 15 $\mu$m. From these viewpoints, the average particle diameter of the inorganic filler is preferably 5 $\mu$m to 50 $\mu$m, more preferably 10 $\mu$m to 30 $\mu$m, even more preferably 10 $\mu$m to 20 $\mu$m, and particularly preferably 15 $\mu$m to 20 $\mu$m. An average particle diameter of the inorganic filler can be measured as a particle diameter (D50) when the accumulation from the small diameter side becomes 50% in the volume-based particle size distribution measured by a laser scattering diffraction method particle size distribution measuring device.

From the viewpoint of fillability into narrow gaps and accompanying mechanical strength of the cured product, a maximum particle diameter of the inorganic filler is preferably at most 100 $\mu$m, more preferably at most 80 $\mu$m, and even more preferably at most 60 $\mu$m, and may be at most 50 $\mu$m.

The maximum particle diameter can be measured as a particle diameter (D99) when the accumulation from the small diameter side becomes 99% in the volume-based particle diameter distribution measured by a laser scattering diffraction method particle size distribution measuring device.

<Other components>

The insulating material for a stator may contain various additives in addition to the epoxy resin, the curing agent, and the inorganic filler. As the additives, a curing accelerator, a coupling agent, an ion exchanger, a mold release agent, a flame retardant, a colorant, a stress reliever, an adhesion imparting agent, and the like can be exemplified.

(Curing accelerator)

The insulating material for a stator may contain a curing accelerator. A type of the curing accelerator is not particularly limited, and imidazoles such as 2-ethyl-4-methylimidazole and 2-phenylimidazole; tertiary amines such as 1,8-diazabicyclo[5.4.0]-7-undecene; phosphonium salts such as tetra-n-butylphosphonium tetraphenylborate; triphenylphosphine; and the like can be exemplified. One type of the curing accelerator may be used alone, or two or more types thereof may be used in combination.

In a case in which the insulating material for a stator contains a curing accelerator, a content of the curing accelerator is preferably 0.1 to 30 parts by mass, and more preferably 1 to 15 parts by mass with respect to 100 parts by mass of the resin components.

(Coupling agent)

The insulating material for a stator may contain a coupling agent from the viewpoint of improving compatibility between the resin components and the inorganic filler, improving adhesion to a base material, and the like. As the coupling agent, a silane compounds such as epoxysilane, phenylsilane, mercaptosilane, aminosilane, phenylaminosilane, alkylsilane, ureidosilane, or vinylsilane, a titanium compound, an aluminum chelate compound, an aluminum/zirconium compound, or the like can be exemplified. One type of the coupling agent may be used alone, or two or more types thereof may be used in combination.

In a case in which the insulating material for a stator contains a coupling agent, an amount of the coupling agent is preferably 0.05 to 5 parts by mass with respect to 100 parts by mass of the inorganic filler, and more preferably 0.1 to 2.5 parts by mass.

(Ion exchanger)

The insulating material for a stator may contain an ion exchanger from the viewpoint of improving moisture resistance, heat resistance, and the like. A type of the ion exchanger is not particularly limited, and a hydrotalcite compound, a hydrous oxide of at least one element selected from the group consisting of magnesium, aluminum, titanium, zirconium, and bismuth, and the like can be exemplified. One type of the ion exchanger may be used alone, or two or more types thereof may be used together.

In a case in which the insulating material for a stator contains an ion exchanger, its content is not particularly limited. For example, a content of the ion exchanger is preferably 0.1 to 30 parts by mass with respect to 100 parts by mass of the resin components, and more preferably 1 to 15 parts by mass.

(Release agent)

The insulating material for a stator may contain a mold release agent from the viewpoint of obtaining good releasability from a mold during molding. A type of the release agent is not particularly limited, and ester-based waxes such as a carnauba wax, a higher fatty acid such as montanic acid or stearic acid, a higher fatty acid metal salt, and a montanic acid ester, polyolefin-based waxes such as oxidized polyethylene and non-oxidized polyethylene, and the like can be exemplified. One type of the release agent may be used alone or two or more types thereof may be used in combination.

In a case in which the insulating material for a stator contains a release agent, its content is not particularly limited. For example, the content of the release agent is preferably 0.01 to 15 parts by mass with respect to 100 parts by mass of the resin components, more preferably 0.1 to 10 parts by mass, and may be 0.1 to 5 parts by mass, or may be 0.1 to 3 parts by mass. When an amount of the release agent is at least 0.01 parts by mass with respect to 100 parts by mass of the resin components, there is a tendency that sufficient releasability can be obtained. When the amount of the release agent is at most 15 parts by mass with respect to 100 parts by mass of the resin components, there is a tendency that better adhesion can be obtained.

(Flame retardant)

The insulating material for a stator may contain a flame retardant. A type of the flame retardant is not particularly limited, and organic or inorganic compounds containing halogen atoms, antimony atoms, nitrogen atoms, or phosphorus atoms, metal hydroxides, and the like can be exemplified. One type of the flame retardant may be used alone, or two or more types thereof may be used together.

In a case in which the insulating material for a stator contains a flame retardant, its content is not particularly limited. For example, the content of the flame retardant is preferably 1 to 300 parts by mass with respect to 100 parts by mass of the resin components, and more preferably 2 to 150 parts by mass.

(Colorant)

The insulating material for a stator may contain a colorant. A type of the colorant is not particularly limited, and carbon black, an organic dye, an organic pigment, titanium oxide, red lead, and red iron oxide can be exemplified. One type of the colorant may be used alone, or two or more types thereof may be used together. A content of the colorant may be appropriately selected depending on purposes and the like.

(Stress reliever)

The insulating material for a stator may contain a stress reliever. A type of the stress reliever is not particularly limited, and thermoplastic elastomers such as silicone-based, styrene-based, olefin-based, urethane-based, polyester-based, polyether-based, polyamide-based, and polybutadiene-based elastomers, rubber particles of natural rubber (NR), acrylonitrile-butadiene rubber (NBR), acryl rubber, urethane rubber, silicone powder, or the like, rubber particles having a core-shell structure such as methyl methacrylate-styrene-butadiene copolymers (MBS), methyl methacrylate-silicone copolymers, or methyl methacrylate-butyl acrylate copolymers, and the like can be exemplified. One type of the stress reliever may be used alone, or two or more types thereof may be used in combination. A content of the stress reliever may be appropriately selected depending on purposes and the like.

(Adhesion imparting agent)

The insulating material for a stator may contain an adhesion imparting agent from the viewpoint of improving adhesion to a metal and improving the insulation characteristics. A type of the adhesion imparting agent is not particularly limited, and compounds having a carboxyl group, a hydroxyl group, an amino group, or the like can be exemplified. One type of the adhesion imparting agent may be used alone or two or more types thereof may be used in combination.
In a case in which the insulating material for a stator contains an adhesion imparting agent, its content is not particularly limited and is preferably 0.01 to 20.0 parts by mass, and more preferably 5.0 to 10.0 parts by mass with respect to 100 parts by mass of the resin components.

[Method for preparing insulating material for stator]

A method for preparing the insulating material for a stator is not particularly limited. For example, a method in which each component has been sufficiently mixed by a mixer or the like, and then the mixture is melted, kneaded with a mixing roll, an extruder, or the like, cooled, and pulverized can be exemplified. More specifically, for example, a method in which each component is mixed, stirred, kneaded with a preheated kneader, a roll, an extruder, or the like, cooled, and pulverized can be exemplified.

[Characteristics of insulating material for stator]

(Properties)

The insulating material for a stator is solid from the viewpoint of the mechanical strength of the cured product. The insulating material has a powdery, granular or tablet shape. In a case in which the insulating material for a stator is tablet-like, its dimensions and mass are preferably set such that they meet molding conditions from the viewpoint of handleability.

(Viscosity)

A viscosity of the insulating material for a stator is not particularly limited. From the viewpoint of fillability into narrow gaps, the viscosity of the insulating material for a stator is preferably at most 1000 Pa·s at 175°C, more preferably at most 500 Pa·s, and even more preferably at most 200 Pa·s. A lower limit of the viscosity of the insulating material for a stator is not particularly limited and may be, for example, at least 100 Pa·s at 175°C. The viscosity of the insulating material for a stator can be measured with a Koka-type flow tester (manufactured by Shimadzu Corporation, for example).

(Molding shrinkage rate)

A molding shrinkage rate of the cured product of the insulating material for a stator obtained by the following method is preferably at most 0.30%, more preferably at most 0.25%, even more preferably at most 0.20%, and particularly preferably at most 0.15%. A lower molding shrinkage rate is more preferable.

The cured product of the insulating material for a stator is treated at 175°C for 5 hours, and the molding shrinkage rate is obtained from the following expression.

Molding shrinkage rate (%)={(length of cured product before treatment - length of cured product after treatment)/ (length of cured product before treatment)} $\times 100$

The length of the cured product is a length of any one side of a rectangular cured product.

In one aspect, the molding shrinkage rate is a molding shrinkage rate of a cured product obtained by molding the insulating material for a stator with a transfer molding machine under the conditions of a mold temperature of 175°C, a molding pressure of 6.9 MPa, and a curing time of 90 seconds.

(Glass transition temperature)

A glass transition temperature (Tg) of the cured product of the insulating material for a stator is preferably at least 130°C, more preferably at least 150°C, and even more preferably at least 170°C from the viewpoint of heat resistance and mechanical strength.

In one aspect, for example, the glass transition temperature of the cured product is such that the glass transition temperature of a cured product obtained by molding the insulating material for a stator with a transfer molding machine under the conditions of a mold temperature of 175°C, a molding pressure of 6.9 MPa, and 90 seconds, and then performing post-curing of it at 175°C for 5 hours is within the above range.

The glass transition temperature can be measured, for example, as follows. It is calculated by cutting the cured product into a strip shape to prepare a test piece and performing dynamic viscoelasticity measurement in a tensile mode. Measurement conditions are set to a frequency of 10 Hz, a heating rate of 5°C/min, and a strain of 0.1%, and in the obtained temperature-tan $\delta$ relational diagram, a temperature at which the tan $\delta$ becomes maximum is regarded as the glass transition temperature. As an evaluation device, for example, RSA-G2 (manufactured by TA Instruments) can be used.

(Bending strength)

A bending strength of the cured product measured by the following method is preferably at least 80 MPa, more preferably at least 100 MPa, and even more preferably at least 120 MPa. An upper limit of the bending strength is not particularly limited.

The cured product of the insulating material is cut into a rectangular parallelepiped of 2.0 mm$\times$5.0 mm$\times$40 mm to prepare a test piece for evaluation of the bending strength. Using this test piece, a bending test is performed using a Tensilon universal material testing machine (for example, Instron 5948 manufactured by Instron) under the conditions of a distance between fulcrums of 32 mm and a crosshead speed of 1 mm/min. Using the measurement results, a bending stress-displacement curve is created from Expression (A), and the maximum stress is defined as the bending strength.

$$\sigma=3FL/2bh^2 \cdots \text{Expression (A)}$$

$\sigma$: Bending stress (MPa)
F: Bending load (N)
L: Distance between fulcrums (mm)
b: Width of test piece (mm)
h: Thickness of test piece (mm)

In one aspect, the bending strength is a bending strength of a cured product obtained by molding the insulating material for a stator with a transfer molding machine under the conditions of a mold temperature of 175°C, a molding pressure of 6.9 MPa, and a curing time of 90 seconds, followed by post-curing at 175°C for 5 hours.

[Insulating method]

A method for insulating the coils using the insulating material for a stator is not particularly limited, and a method for sealing the coils by transfer molding, injection molding, compression molding, or the like can be exemplified. Among them, by sealing the coils under pressurized and heated conditions by transfer molding, it tends to be possible to achieve tight sealing while inhibiting inclusion of voids, and to be able to further improve the insulation. Since the insulating material for a stator of the present disclosure contains the spherical inorganic filler and has excellent fluidity as compared to a case in which it contains a non-spherical inorganic filler, it is possible to perform suitable molding by transfer molding. A temperature and a time for transfer molding can be appropriately selected depending on a type of insulating material for a stator. For example, the molding may be performed under the conditions of a mold temperature of 170°C to 180°C, a molding pressure of 5 MPa to 150 MPa, and a molding time of 1 minute to 3 minutes.

In one embodiment, the entire stator including coil parts may be sealed together with the insulating material for a stator of the present disclosure by transfer molding. Conventionally, sealing the stator by transfer molding is difficult primarily due to size constraints. However, when transfer molding is performed using the insulating material for a stator according to the present disclosure, the insulation between the coils can be easily performed. Also, each member of the stator may be individually sealed.

[Use of insulating material for stator]

The insulating material for a stator according to the present disclosure can be used for the insulation between the coils of the stator, as described above.

<<Stator>>

The stator of the present disclosure has the coils insulated by the insulating material for a stator described above. Regardless of whether a winding method for the coil is distributed winding or concentrated winding, the insulating material for a stator according to the present disclosure can be applied thereto.

A material of the coils is not particularly limited. For example, as the material of the coils, conductors such as copper, aluminum, silver, and alloys thereof can be exemplified. Coils obtained by covering conductors with insulating layers made of resins may be used.

The stator of the present disclosure can be applied to various motors such as hybrid vehicle motors, electric vehicle motors, hybrid diesel locomotive motors, electric motorcycle motors, elevator motors, and motors used in construction machinery. In particular, since the stator of the present disclosure is excellent in insulation between coils, it can be suitably applied even to high-output or downsized vehicle motors.

<<Method for manufacturing stator>>

A method for manufacturing a stator according to the present disclosure includes insulating between the coils with the insulating material for a stator. Details of the insulating material for a stator, the insulating method, and the stator are as described above.

<<Use of insulating material>>

The present disclosure further includes use of the insulating material containing the epoxy resin, the curing agent, and the spherical inorganic filler for the insulation between the coils of the stator. Details of the insulating material, the stator, and the insulation method are as described above.

[Examples]

Test data for the insulating material for a stator will be described below. The present invention is in no way limited to the following test data.

<Production of insulating material>

First, each component shown below was prepared.

· Epoxy resin: Polyfunctional epoxy resin with epoxy equivalent of 163 g/eq to 175 g/eq and softening point of 57°C to 63°C
· Curing agent: Phenolic novolak resin with hydroxyl equivalent of 106 g/eq and softening point of 68°C to 74°C
· Inorganic filler 1: D50 is 19.9 $\mu$m (catalog value), including fused silica particles with maximum particle diameter of at most 55 $\mu$m (average circularity is in the range of 0.8 to 1.0, and average aspect ratio is in the range of 0.9 to 1.0)

For comparison, the following components were prepared.

· Phenol resin: resol type
· Inorganic filler 2: glass (fibrous inorganic filler)

Each component shown in Table 1 was blended in the amount shown in the same table and thoroughly mixed in a mixer, and then the mixture was melt-kneaded at a temperature of 70°C to 100°C using a twin-screw kneader. Next, after the melt was cooled, the solidified material was pulverized into powder to prepare the intended powdery insulating material.

<Evaluation>

The produced insulating material was evaluated by various tests shown below. The insulating material was molded, unless otherwise specified, using a transfer molding machine under the conditions of a mold temperature of 175°C, a molding pressure of 6.9 MPa, and a curing time of 90 seconds. In addition, post-curing was performed at 175°C for 5 hours as necessary.

[Fillability]

A mold (L=100 mm) having a gap of 0.3 mm is prepared, and transfer molding is performed under the above conditions. Whether the gap of 0.3 mm is filled or not is visually checked.
Fillability is evaluated as follows.

A: No unfilled part
B: Flow marks are observed, but there is no unfilled part

[Dimensional stability (molding shrinkage rate)]

The molding shrinkage rate before and after post-curing is measured, and compositions with less shrinkage rate are considered good.
The molding shrinkage rate is calculated by the following expression.

Molding shrinkage rate (%)={(length of cured product before post-curing - length of cured product after post-curing)/ (length of cured product before post-curing)} $\times$ 100

The length of the cured product is the length of any one side of the rectangular cured product.

[Glass transition temperature (Tg)]

The glass transition temperature is measured by the following method, and compositions with a high Tg are determined to be good.
The cured product after post-curing is cut into a strip shape to prepare a test piece, and dynamic viscoelasticity measurement is performed in a tensile mode to calculate the glass transition temperature. Measurement conditions were a frequency of 10 Hz, a heating rate of 5°C/min, and a strain of 0.1%, and In the obtained temperature-tan $\delta$ relational diagram, a temperature at which tan $\delta$ becomes maximum is regarded as the glass transition temperature. As an evaluation device, RSA-G2 (TA Instruments) is used.

[Bending strength]

Bending strength is measured by the following method, and compositions that exhibit high bending strength are determined to be good.
The cured product after post-curing of the insulating material is cut into a rectangular parallelepiped of 2.0 mm$\times$5.0 mm$\times$40 mm to prepare a test piece for evaluation of bending strength. Using this test piece, a bending test is performed with a Tensilon universal material testing machine (Instron 5948 manufactured by Instron) under the conditions of a distance between fulcrums of 32 mm and a crosshead speed of 1 mm/min. Using the measurement results, a bending stress-displacement curve is created from Expression (A), and the maximum stress is defined as the bending strength.

$$\sigma = 3FL/2bh^2 \cdots \text{Expression (A)}$$

σ: Bending stress (MPa)
F: Bending load (N)
L: Distance between fulcrums (mm)
b: Width of test piece (mm)
h: Thickness of test piece (mm)

[Table 1]

| Blending | Unit | Example 1 | Example 2 | Example 3 |
|---|---|---|---|---|
| Epoxy resin | Parts by mass | 100 | 100 | - |
| Phenol resin (for comparison) | Parts by mass | - | - | 100 |
| Curing agent | Parts by mass | 70 | 70 | - |
| Inorganic filler 1 (spherical) | Parts by mass | 500 | 950 | - |
| Inorganic filler 1 (fibrous) | Parts by mass | - | - | 200 |
| (Content of inorganic filler in composition) | % by mass | 75 | 85 | 67 |
| Presence of unfilled part | - | A | B | B |
| Molding shrinkage rate | % | 0.20 | 0.10 | 0.40 |

In Examples 1 and 2, the insulating materials had excellent fluidity, and thus even when the content of the inorganic filler was increased to 85% by mass, excellent fillability was obtained without generation of unfilled parts. In addition, in Examples 1 and 2, as compared to Comparative Example 1, fluidity equal to or higher than that of Comparative Example 1 was obtained.

Further, it was found that the insulating materials of Examples 1 and 2 have a low molding shrinkage rate and can be suitably applied as the insulating material for a stator with which high-precision sealing is possible. On the other hand, it turned out that, in Comparative Example 1, the molding shrinkage rate was high, flow marks were observed due to fiber orientation, and the distribution of the filler tended to be uneven, and thus it is difficult to be applied to the insulating material for a stator, which requires high accuracy.

As a result of measuring the glass transition temperature (Tg), the insulating materials of Example 1, Example 2, and Comparative Example 1 had Tg of 175°C, 175°C, and 300°C, respectively.

As a result of bending strength measurement, the bending strengths of the insulating materials of Example 1, Example 2, and Comparative Example 1 were 100 MPa, 130 MPa, and 200 MPa, respectively.

From the above results, it can be seen that the insulating materials for a stator of the examples have better fillability and dimensional stability than the insulating material for a stator of the comparative example, and also have good mechanical strength and heat resistance.

**Claims**

1. An insulating material for a stator containing an epoxy resin, a curing agent, and a spherical inorganic filler, the insulating material being used for insulation between coils of a stator by sealing the coils by transfer molding, wherein

   the curing agent comprises a phenol curing agent,
   a content of the inorganic filler is at least 50% by mass with respect to a total mass of the insulating material, and
   the insulating material has a powdery, granular or tablet shape.

2. The insulating material for a stator according to claim 1, wherein the inorganic filler contains at least one selected from the group consisting of silica, alumina, and magnesium oxide.

3. The insulating material for a stator according to claim 1, wherein the content of the inorganic filler is at least 70% by mass with respect to the total mass of the insulating material for a stator.

4. The insulating material for a stator according to claim 3, wherein the content of the inorganic filler is at least 80% by mass with respect to the total mass of the insulating material for a stator.

5. The insulating material for a stator according to any one of claims 1 to 4, wherein a maximum particle diameter of the inorganic filler is at most 100 $\mu$m.

6. The insulating material for a stator according to any one of claims 1 to 5, wherein an average aspect ratio of the inorganic filler in scanning electron microscope observation is 0.8 to 1.0.

7. A stator comprising coils insulated by the insulating material for a stator according to any one of claims 1 to 6.

8. A method for manufacturing a stator, wherein insulation between coils is performed with the insulating material for a stator according to any one of claims 1 to 6.

9. A method for using an insulating material for insulation between coils of a stator, comprising sealing the coils by transfer molding,

wherein the insulating material contains an epoxy resin, a curing agent, and a spherical inorganic filler,
the curing agent comprises a phenol curing agent,
a content of the inorganic filler is at least 50% by mass with respect to a total mass of the insulating material, and
the insulating material has a powdery, granular or tablet shape.

**Patentansprüche**

1. Isoliermaterial für einen Stator, umfassend ein Epoxyharz, ein Härtemittel und ein sphärisches anorganisches Füllmaterial, wobei das Isoliermaterial zur Isolierung zwischen Spulen eines Stators verwendet wird, indem die Spulen durch Transferguss versiegelt werden, wobei

das Härtemittel ein Phenolhärtemittel umfasst,
ein Gehalt des anorganischen Füllmaterials mindestens 50 Masseprozent in Bezug auf eine Gesamtmasse des Isoliermaterials beträgt, und
das Isoliermaterial eine pulvrige, körnige oder Tablettenform aufweist.

2. Isoliermaterial für einen Stator nach Anspruch 1, wobei das anorganische Füllmaterial mindestens eines, ausgewählt aus der Gruppe enthält, die aus Kieselerde, Tonerde und Magnesiumoxid besteht.

3. Isoliermaterial für einen Stator nach Anspruch 1, wobei der Gehalt des anorganischen Füllmaterials mindestens 70 Masseprozent in Bezug auf die Gesamtmasse des Isoliermaterials für einen Stator beträgt.

4. Isoliermaterial für einen Stator nach Anspruch 3, wobei der Gehalt des anorganischen Füllmaterials mindestens 80 Masseprozent in Bezug auf die Gesamtmasse des Isoliermaterials für einen Stator beträgt.

5. Isoliermaterial für einen Stator nach einem der Ansprüche 1 bis 4, wobei ein maximaler Partikeldurchmesser des anorganischen Füllmaterials höchstens 100 $\mu$m beträgt.

6. Isoliermaterial für einen Stator nach einem der Ansprüche 1 bis 5, wobei ein durchschnittliches Aspektverhältnis des anorganischen Füllmaterials unter Rasterelektronenmikroskop-Beobachtung 0,8 bis 1,0 beträgt.

7. Stator, umfassend Spulen, die durch das Isoliermaterial für einen Stator nach einem der Ansprüche 1 bis 6 isoliert sind.

8. Verfahren zur Herstellung eines Stators, wobei Isolierung zwischen Spulen mit dem Isoliermaterial für einen Stator nach einem der Ansprüche 1 bis 6 durchgeführt wird.

9. Verfahren zur Verwendung eines Isoliermaterials zur Isolierung zwischen Spulen eines Stators, umfassend Versiegeln der Spulen durch Transferguss,

wobei das Isoliermaterial ein Epoxyharz, ein Härtemittel und ein sphärisches anorganisches Füllmaterial enthält,
das Härtemittel ein Phenolhärtemittel umfasst,
ein Gehalt des anorganischen Füllmaterials mindestens 50 Masseprozent in Bezug auf eine Gesamtmasse des

EP 4 195 462 B1

Isoliermaterials beträgt und
das Isoliermaterial eine pulvrige, körnige oder Tablettenform aufweist.

**Revendications**

1. Matériau isolant pour un stator contenant une résine époxy, un agent de durcissement et une charge inorganique sphérique, le matériau isolant étant utilisé pour l'isolation entre les bobines d'un stator en scellant les bobines par moulage par transfert, dans lequel

   l'agent de durcissement comprend un agent de durcissement au phénol,
   une teneur en charge inorganique est d'au moins 50 % en masse par rapport à la masse totale du matériau isolant, et
   le matériau isolant a une forme pulvérulente, granulaire ou en comprimés.

2. Matériau isolant pour un stator selon la revendication 1, dans lequel la charge inorganique contient au moins un élément choisi dans le groupe constitué par la silice, l'alumine et l'oxyde de magnésium.

3. Matériau isolant pour un stator selon la revendication 1, dans lequel la teneur en charge inorganique est d'au moins 70 % en masse par rapport à la masse totale du matériau isolant pour un stator.

4. Matériau isolant pour un stator selon la revendication 3, dans lequel la teneur en charge inorganique est d'au moins 80 % en masse par rapport à la masse totale du matériau isolant pour un stator.

5. Matériau isolant pour un stator selon l'une quelconque des revendications 1 à 4, dans lequel le diamètre maximal des particules de la charge inorganique est d'au plus 100 μm.

6. Matériau isolant pour un stator selon l'une quelconque des revendications 1 à 5, dans lequel un rapport d'aspect moyen de la charge inorganique dans une observation au microscope électronique à balayage est compris entre 0,8 et 1,0.

7. Stator comprenant des bobines isolées par le matériau isolant pour un stator selon l'une quelconque des revendications 1 à 6.

8. Procédé de fabrication d'un stator, dans lequel l'isolation entre les bobines est réalisée avec le matériau isolant pour un stator selon l'une quelconque des revendications 1 à 6.

9. Procédé d'utilisation d'un matériau isolant pour l'isolation entre des bobines d'un stator, comprenant le scellement des bobines par moulage par transfert,

   dans lequel le matériau isolant contient une résine époxy, un agent de durcissement et une charge inorganique sphérique,
   l'agent de durcissement comprend un agent de durcissement au phénol,
   une teneur en charge inorganique est d'au moins 50 % en masse par rapport à la masse totale du matériau isolant, et
   le matériau isolant a une forme pulvérulente, granuleuse ou en comprimés.

14

## EP 4 195 462 B1

**Patent documents cited in the description**

- JP 2019170105 A
- JP 2009261086 A
- WO 2013121590 A
- JP 2017005870 A
- US 2017301429 A1